(19) **Europäisches Patentamt**

**European Patent Office**

**Office européen des brevets**

(11) **EP 0 903 563 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
*G01F 23/296* (2006.01)

(21) Anmeldenummer: **97116486.8**

(22) Anmeldetag: **22.09.1997**

(54) **Vorrichtung zur Feststellung und/oder Überwachung eines vorbestimmten Füllstands in einem Behälter**

Device for the detection and/or monitoring of a predetermined level in a container

Dispositif pour la détection et/ou la surveillance d'un niveau prédéterminé dans un récipient

(84) Benannte Vertragsstaaten:
**DE FR GB IT NL**

(43) Veröffentlichungstag der Anmeldung:
**24.03.1999 Patentblatt 1999/12**

(73) Patentinhaber: **Endress + Hauser GmbH + Co. KG**
**79689 Maulburg (DE)**

(72) Erfinder:
• **Pfeiffer, Helmut**
  **D-78585 Steinen (DE)**
• **Getman, Igor, Prof.Dr.**
  **D-79540 Lörrach (DE)**

• **Lopatin, Sergej Dr.**
  **79539 Lörrach (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 070 334           EP-A- 0 409 732**
**WO-A-95/16190           DE-A- 3 336 991**
**GB-A- 2 290 142**

EP 0 903 563 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Feststellung und/oder Überwachung des Füllstands eines Füllguts in einem Behälter mit Hilfe eines Füllstandssensors, der ein mechanisches Schwingsystem und ein elektromechanisches Wandlersystem aufweist, wobei der Füllstandssensor so am Behälter angebracht ist, daß das mechanische Schwingsystem mit dem Füllgut in Berührung kommt, wenn dieses einen vorbestimmten Füllstand erreicht, und wobei das Wandlersystem mit einer Niederfrequenz-Erregungsschaltung verbunden ist, die so ausgebildet ist, daß sie das mechanische Schwingsystem zu einer niederfrequenten Schwingung erregt, sowie mit einer Niederfrequenz-Auswerteschaltung, die durch Auswertung der Frequenz und/oder der Amplitude eines vom Wandlersystem gelieferten elektrischen Signals ein Ausgangssignal liefert, das anzeigt, ob das mechanische Schwingsystem mit dem Füllgut in Berührung steht oder nicht.

Eine Vorrichtung dieser Art ist beispielsweise aus der DE 33 36 991 A1 bekannt. Bei dieser bekannten Vorrichtung besteht das mechanische Schwingsystem aus zwei Schwingstäben, die im Abstand nebeneinander an einer Membran befestigt sind, deren Rand mit einem Einschraubstück verbunden ist. Das elektromechanische Wandlersystem umfaßt einen Erregungswandler und einen Empfangswandler. Wenn an den Erregungswandler eine Wechselspannung angelegt wird, wirkt er auf die den Schwingstäben abgewandte Seite der Membran so ein, daß die Schwingstäbe in gegensinnige Schwingungen quer zu ihrer Längsrichtung versetzt werden, und der Empfangswandler setzt die Schwingungen des mechanischen Schwingsystems in eine elektrische Wechselspannung um. Die beiden Wandler sind mit einem Verstärker in einem Selbsterregungskreis verbunden, so daß sich das mechanische Schwingsystem zu Schwingungen mit seiner Eigenresonanzfrequenz erregt. Die Eigenresonanzfrequenz des mechanischen Schwingsystems hängt davon ab, ob die Schwingstäbe in Luft schwingen oder in das Füllgut im Behälter eintauchen; sie ist im eingetauchten Zustand niedriger als beim Schwingen in Luft, liegt aber in allen Fällen im Niederfrequenzbereich unter 1000 Hz. Die Niederfrequenz-Auswerteschaltung vergleicht die Frequenz der im Selbsterregungskreis bestehenden elektrischen Wechselspannung, die mit der Eigenresonanzfrequenz des mechanischen Schwingsystems übereinstimmt, mit einem Schwellenwert, und sie gibt ein Ausgangssignal ab, das anzeigt, ob diese Frequenz über oder unter dem Schwellenwert liegt.

Eine aus der DE 32 15 040 C2 bekannte Vorrichtung zur Feststellung und/oder Überwachung des Füllstands in einem Behälter hat ein mechanisches Schwingsystem, das durch einen rohrförmigen Hohlkörper gebildet ist, in dessen Hohlraum ein Querglied angeordnet ist, das an zwei einander gegenüberliegenden Befestigungspunkten an der Innenwand des Hohlraumes befestigt ist. Das Wandlersystem, das einen Erregungswandler und einen Empfangswandler enthält, wirkt mit dem Querglied zusammen, das in radiale Schwingungen versetzbar ist, die auf die Wand des rohrförmigen Hohlkörpers übertragen werden. Die Eigenresonanzfrequenz dieses mechanischen Schwingsystems liegt zwischen 20 und 30 kHz. Die Schwingung der Außenwand des zylindrischen Hohlkörpers wird bei Berührung mit dem Füllgut gedämpft, und dementsprechend ändert sich die Amplitude der vom Empfangswandler abgegebenen Wechselspannung. Die Auswerteschaltung vergleicht die Amplitude dieser Wechselspannung mit einem Schwellenwert, um anzuzeigen, ob der rohrförmige Hohlkörper mit dem Füllgut in Berührung steht oder nicht.

Es sind andererseits Vorrichtungen zur Feststellung und/oder Überwachung des Füllstands in einem Behälter bekannt, die kein mit seiner Eigenresonanzfrequenz schwingendes mechanisches Schwingsystem enthalten, sondern die Anwesenheit eines Füllguts bei einem vorbestimmten Füllstand mit Hilfe von elastischen Wellen feststellen, deren Frequenz im Bereich der Ultraschallfrequenzen liegt. So beschreibt die EP 0 409 732 B1 bzw. die entsprechende DE 690 08 955 T2 einen Detektor zur Anzeige einer Flüssigkeit mit einem vertikal angeordneten Wellenleiter für elastische Wellen, dessen unteres Ende auf der Höhe des zu überwachenden Füllstands liegt. Der Wellenleiter hat zwei zylindrische Bereiche, von denen der obere Bereich vollzylindrisch ist und der untere Bereich, der einen größeren Außendurchmesser als der obere Bereich hat, vollzylindrisch oder rohrförmig sein kann. Ein am oberen Ende des Wellenleiters angebrachter Wandler sendet impulsförmige elastische Wellen aus, die durch den Wellenleiter zum unteren Ende laufen. Die Frequenz der elastischen Wellen liegt in der Größenordnung von 75 bis 125 kHz. Wenn das untere Ende des Wellenleiters nicht in Kontakt mit der Flüssigkeit steht, wird der ausgesandte Wellenzug am Ende des Wellenleiters reflektiert, so daß er als Echo großer Amplitude zu dem Wandler zurückläuft und von diesem in ein elektrisches Empfangssignal mit entsprechend großer Amplitude umgewandelt wird. Wenn dagegen das untere Ende des Wellenleiters in die Flüssigkeit eintaucht, wird der vom Wandler ausgesandte Wellenzug von der Flüssigkeit absorbiert, was zu einer beträchtlichen Abschwächung des reflektierten Echos führt. Durch Vergleich der Amplituden des elektrischen Empfangssignals mit einem Schwellenwert kann daher festgestellt werden, ob der Füllstand der Flüssigkeit im Behälter über oder unter der Höhe des unteren Endes des Wellenleiters steht. Da die Dämpfung der reflektierten Echos umso größer ist, je weiter der Wellenleiter in die Flüssigkeit eintaucht, kann durch Vergleich der Amplitude des elektrischen Empfangssignals mit verschiedenen Schwellenwerten auch festgestellt werden, auf welcher Höhe der Füllstand innerhalb eines gewissen Abschnitts des unteren Bereichs des Wellenleiters liegt.

Auf dem Markt gibt es somit niederfrequente und hochfrequente Systeme zur Feststellung und/oder Überwachung des Füllstands in einem Behälter mittels mechanischer Schwingungen. Typische Frequenzen der niederfrequenten Meßsysteme liegen im hörbaren Schallbereich unterhalb von 1000 Hz, während typische Frequenzen der hochfrequenten Meßsysteme im Ultraschallbereich oberhalb von 15 kHz liegen.

Jedes dieser Prinzipien hat Vor- und Nachteile, je nach dem zu erfassenden Füllgut und den vorherrschenden Umgebungseinflüssen. Beispielsweise haben hochfrequente Meßsysteme Probleme bei ausgasenden Füllgütern, wie Sprudel, da Blasen an dem mechanischen Schwingsystem zu einer starken Verschmierung des Meßsignals führen. Dieses Problem kann nur durch eine aufwendige Auswertung von Mehrfachreflexionen bewältigt werden. Niederfrequente Meßsysteme arbeiten dagegen bei ausgasenden Füllgütern problemlos. Unterschiedlich ist auch das Vehalten im Falle einer Ansatzbildung. Bei weichem Ansatz arbeiten niederfrequente Meßsysteme unzuverlässig, hochfrequente Meßsysteme dagegen zuverlässig, während bei hartem Ansatz das Verhalten umgekehrt ist.

Schließlich werden niederfrequente Meßsysteme durch niederfrequente Fremdvibrationen und hochfrequente Meßsysteme durch hochfrequente Fremdvibrationen gestört, während beide Arten von Meßsystemen jeweils durch Fremdvibrationen des anderen Frequenzbereichs nicht beeinträchtigt werden.

Aufgabe der Erfindung ist es, eine kostengünstige Vorrichtung zur Feststellung und/oder Überwachung des Füllstands in einem Behälter zu schaffen, die vielseitig zur Erfassung des Füllstands unterschiedlicher Füllgüter unter verschiedenen Bedingungen einsetzbar ist.

Ausgehend von einer Vorrichtung der eingangs angegebenen Art wird diese Aufgabe nach der Erfindung dadurch gelöst, daß ein Bestandteil des Füllstandssensors, der mit dem Füllgut in Berührung kommt, wenn dieses den vorbestimmten Füllstand erreicht, mit einem elektromechanischen Wandlersystem zur Anregung einer hochfrequenten elastischen Schwingung in dem Bestandteil verbunden ist, und daß eine Hochfrequenz-Auswerteschaltung vorgesehen ist, die durch Auswertung eines in Abhängigkeit von der hochfrequenten elastischen Schwingung erzeugten elektrischen Signals ein Ausgangssignal erzeugt, das anzeigt, ob der Bestandteil mit dem Füllgut in Berührung steht oder nicht.

Die erfindungsgemäße Vorrichtung besteht aus der Vereinigung eines niederfrequenten Meßsystems mit einem hochfrequenten Meßsystem, wobei für das hochfrequente Meßsystem ein Bestandteil des niederfrequenten Meßsystems verwendet wird. Diese Lösung ist einfach und kostensparend, und sie ergibt insbesondere den Vorteil, daß die Einbaubedingungen für das kombinierte System die gleichen sind wie für das niederfrequente System allein. Somit kann das kombinierte System einfach durch Austausch gegen ein vorhandenes niederfrequentes System eingebaut werden, ohne daß hierzu Änderungen am Behälter erforderlich sind. Da praktisch für jeden Anwendungsfall wenigstens eines der beiden Meßsysteme ein brauchbares Ergebnis liefert, kann mit dem kombinierten System der Füllstand in einem breiten Spektrum von Füllgütern und Anwendungsbedingungen festgestellt oder überwacht werden. In den Fällen, in denen beide Meßsysteme brauchbare Ergebnisse liefern, besteht eine Redundanz, die eine erhöhte Sicherheit ergibt und eine wechselseitige Kontrolle der Funktion der beiden Meßsysteme ermöglicht.

Eine Ausführungsform der erfindungsgemäßen Vorrichtung besteht darin, daß der für das hochfrequente Meßsystem verwendete Bestandteil des Füllstandssensors als elastischer Wellenleiter ausgebildet ist, in dem sich die hochfrequente elastische Schwingung als Welle fortpflanzt, und daß die Hochfrequenz-Auswerteschaltung die Laufzeit der elastischen Welle erfaßt und auswertet.

Eine andere Ausführungsform der erfindungsgemäßen Vorrichtung besteht darin, daß die Hochfrequenz-Auswerteschaltung die Frequenz der hochfrequenten elastischen Schwingung des Bestandteils auswertet.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung von Ausführungsbeispielen, die in der Zeichnung dargestellt sind. In der Zeichnung zeigen:

Fig. 1   eine Schnittansicht einer Vorrichtung zur Feststellung und/oder Überwachung des Füllstands in einem Behälter gemäß einer ersten Ausführungsform der Erfindung,

Fig. 2   das Schaltbild der Erregungs- und Auswerteschaltungen für die Vorrichtung von Fig. 1,

Fig. 3   eine perspektivische Ansicht des in der Vorrichtung von Fig. 1 verwendeten Ultraschallwandlers,

Fig. 4   eine Querschnittansicht des den Ultraschallwandler enthaltenden Schwingstabs der Vorrichtung von Fig. 1,

Fig. 5   eine schematische Darstellung einer bei der Vorrichtung von Fig. 1 angewendeten elastischen Schwingung,

Fig. 6   eine andere Anwendung der Vorrichtung von Fig. 1,

Fig. 7   eine zweite Ausführungsform der erfindungsgemäßen Vorrichtung,

Fig. 8   einen bei der Vorrichtung von Fig. 7 angewendeten piezoelektrischen Wandler und

Fig. 9  eine dritte Ausführungsform der erfindungsgemäßen Vorrichtung.

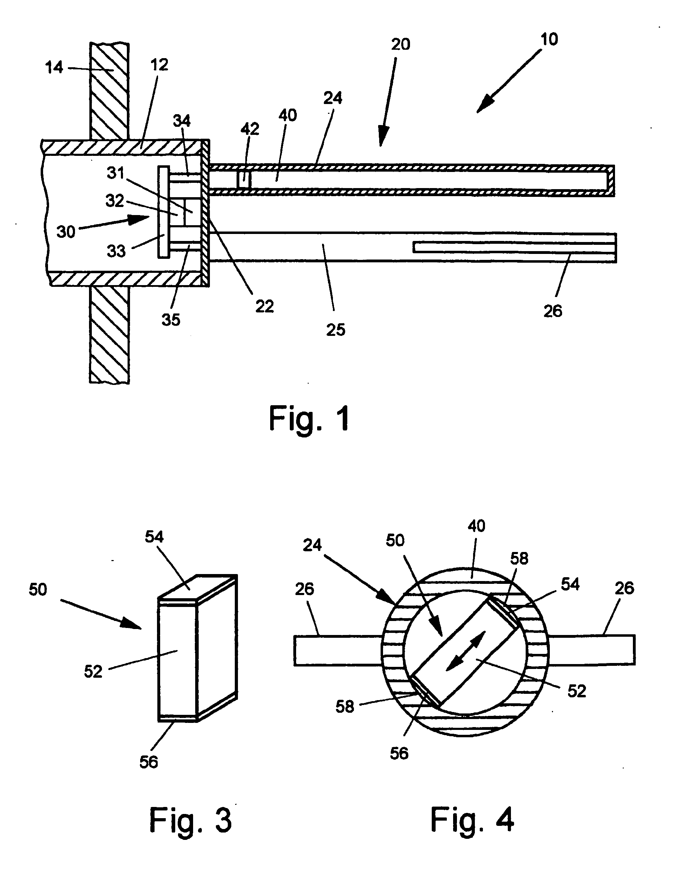

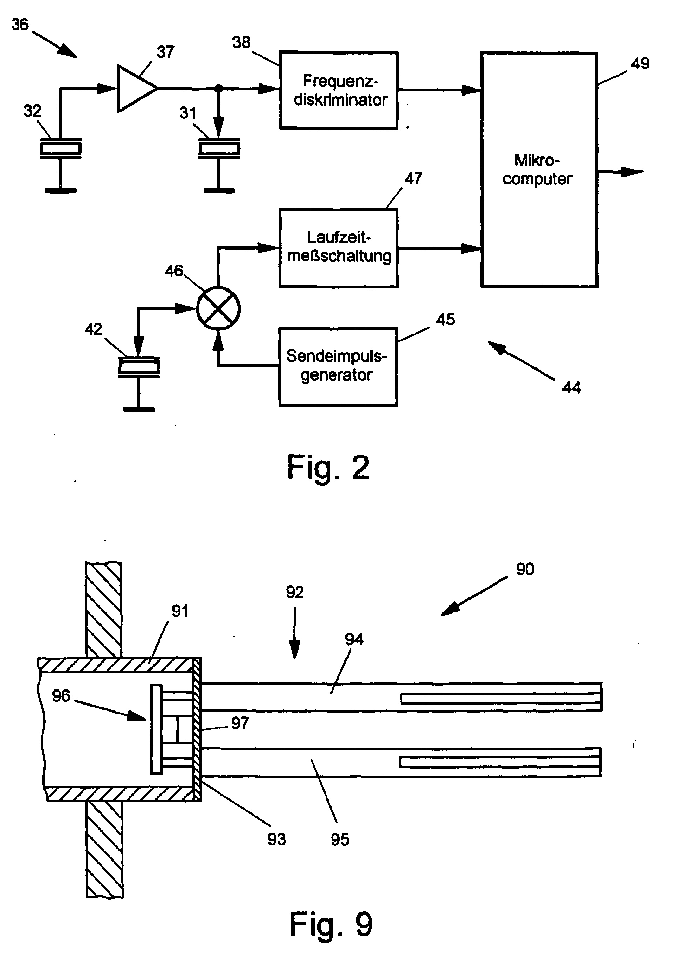

Der in Fig. 1 gezeigte Füllstandssensor 10 zur Feststellung und/oder Überwachung des Füllstands in einem Behälter hat ein rohrförmiges Gehäuse 12, das in einer Öffnung der Behälterwand 14 auf der Höhe des zu überwachenden Füllstands befestigt ist. Das dem Inneren des Behälters zugewandte Ende des Gehäuses 12 trägt ein mechanisches Schwingsystem 20. Das mechanische Schwingsystem 20 besteht bei dem dargestellten Beispiel aus einer Membran 22, die rings um ihren Umfangsrand mit dem Rand des rohrförmigen Gehäuses 12 verbunden ist, und aus zwei Schwingstäben 24 und 25, die jeweils mit einem Ende an der Membran 22 befestigt sind, so daß sie parallel zueinander von der Membran 22 in das Innere des Behälters ragen. An jedem Schwingstab sind zwei einander diametral gegenüberliegende flache Paddel 26 angebracht, die sich vom freien Ende des Schwingstabes über einen Teil von dessen Länge erstrecken und quer zu der Ebene liegen, die die Achsen der beiden Schwingstäbe enthält. Von diesen Paddeln ist in Fig. 1 nur eines der beiden Paddel 26 des Schwingstabes 25 zu sehen, während in Fig. 4 die beiden Paddel 26 des Schwingstabes 24 zu erkennen sind.

Die dem Behälter abgewandte Seite der Membran 22 ist mit einem elektromechanischen Wandlersystem 30 verbunden, das so ausgebildet ist, daß es das mechanische Schwingsystem 20 zu Schwingungen mit seiner Eigenresonanzfrequenz anregen kann. Zu diesem Zweck enthält das elektromechanische Wandlersystem 30 vorzugsweise einen elektromechanischen Erregungswandler 31 und einen elektromechanischen Empfangswandler 32. Jeder der beiden elektromechanischen Wandler 31 und 32 ist so ausgebildet, daß er ein zugeführtes elektrisches Wechselsignal (Wechselspannung oder Wechselstrom) in eine mechanische Schwingung und umgekehrt eine auf ihn einwirkende mechanische Schwingung in ein elektrisches Wechselsignal umwandeln kann. Als Beispiel ist angenommen, daß jeder Wandler 31 und 32 ein piezoelektrischer Wandler ist, der wenigstens ein piezoelektrisches Element enthält. Ein solches piezoelektrisches Element besteht bekanntlich aus einem scheibenförmigen Piezokristall, der zwischen zwei Elektroden angeordnet ist. Die Dicke des Piezokristalls ändert sich in Abhängigkeit von der an die Elektroden angelegten elektrischen Spannung und umgekehrt erzeugen mechanisch erzwungene Dickenänderungen des Piezokristalls eine elektrische Spannung an den Elektroden. Der Erregungswandler 31 ist so mit der Membran verbunden, daß er aufgrund der Dickenschwingungen seines Piezokristalls, die beim Anlegen einer elektrischen Wechselspannung erzeugt werden, die Membran 22 in Schwingungen versetzt, die auf die beiden Schwingstäbe 24 und 25 übertragen werden, so daß diese Schwingstäbe gegensinnige mechanische Schwingungen quer zu ihrer Längsrichtung ausführen, wobei die Schwingungsebene die Ebene ist, die die Achsen der beiden Schwingstäbe enthält und in Fig. 1 mit der Zeichenebene zusammenfällt. Der Empfangswandler 32 ist so mit der Membran 22 verbunden, daß er aufgrund der mechanischen Schwingung der Membran 22 eine elektrische Wechselspannung zwischen seinen beiden Elektroden erzeugt. Die piezoelektrischen Wandler 31 und 32 sind in einem Stapel zwischen der Membran 22 und einer Brücke 33 eingespannt, die durch Stützen 34 und 35 im Abstand von der Membran 22 gehalten ist.

Die piezoelektrischen Wandler 31 und 32 sind in der in Fig. 2 gezeigten Weise mit einer Niederfrequenz-Erregungs- und Auswerteschaltung 36 verbunden, die in dem Gehäuse 12 untergebracht sein kann. Jeweils eine Elektrode jedes der beiden Wandler 31 und 32 ist mit einem Masseanschluß verbunden, der beispielsweise durch die Membran 22 und das Gehäuse 12 gebildet sein kann. Die andere Elektrode des Empfangswandlers 32 ist mit dem Eingang eines Verstärkers 37 verbunden, an dessen Ausgang der Erregungswandler 31 angeschlossen ist. Somit liegt der Füllstandssensor 10 mit den beiden Wandlern 31 und 32, die über das mechanische Schwingsystem 20 miteinander gekoppelt sind, im Rückkopplungskreis des Verstärkers 37, der so ausgebildet ist, daß die Selbsterregungsbedingng erfüllt ist, so daß das mechanische Schwingsystem über die beiden Wandler 31 und 32 zu Schwingungen mit seiner Eigenresonanzfrequenz angeregt wird. Diese Eigenresonanzfrequenz liegt im Bereich der hörbaren akustischen Frequenzen, in der Regel unter 1000 Hz; es handelt sich also um eine Niederfrequenz.

Zur Überwachung des Füllstands mit dem bisher beschriebenen Füllstandssensor 10 wird die Tatsache ausgenutzt, daß die Eigenresonanzfrequenz des mechanischen Schwingsystems 20 davon abhängt, ob die Schwingstäbe 24, 25 in Luft schwingen oder in ein Füllgut eintauchen. Die Eigenresonanzfrequenz ist einerseits durch die Federkonstante der als Rückholfeder wirkenden Membran 22 und andererseits durch die schwingende Masse bestimmt. Die schwingende Masse besteht aus der Masse der Schwingstäbe 24, 25 und aus der Masse des von den Schwingstäben bei der Schwingbewegung mitgenommenen umgebenden Mediums. Wenn sich die Schwingstäbe 24, 25 in Luft befinden, ist die mitgeführte Masse der Luft vernachlässigbar, und es stellt sich eine Eigenresonanzfrequenz ein, die im wesentlichen durch die Masse der Schwingstäbe bestimmt ist. Wenn dagegen die Schwingstäbe 24, 25 in ein Füllgut eintauchen, wird die mitgeführte Masse größer, und dementsprechend wird die Eigenresonanzfrequenz des mechanischen Schwingsystems niedriger. Diese Wirkung wird durch die Paddel 26 verstärkt, da diese Paddel die mitgeführte Masse des Füllguts vergrößern.

Zur Erfassung der Änderung der Eigenresonanzfrequenz des mechanischen Schwingsystems 20 ist in der Schaltung von Fig. 2 an den Ausgang des Verstärkers 37 ein Frequenzdiskriminator 38 angeschlossen, der die Frequenz der vom Verstärker 37 abgegebenen Wechselspannung, die gleich der Eigenresonanzfrequenz des mechanischen Schwingsystems 20 ist, mit einem Schwellenwert vergleicht. Wenn diese Frequenz über dem Schwellenwert liegt, hat das Ausgangssignal des Frequenzdiskriminators 38 einen ersten Signalwert, der anzeigt, daß die Schwingstäbe 24 und 25 in Luft schwingen und somit der zu überwachende Füllstand nicht erreicht ist. Wenn dagegen die Frequenz der vom Verstärker abgegebenen Wechselspannung unter dem Schwellenwert liegt, hat das Ausgangssignal des Frequenzdiskriminators 38 einen zweiten Signalwert, der anzeigt, daß die Schwingstäbe 24, 25 von dem Füllgut bedeckt sind und somit der zu überwachende Füllstand erreicht oder überschritten ist.

Der Aufbau und die Funktionsweise des bisher beschriebenen niederfrequenten Meßsystems des Füllstandssensors 20 sind beispielsweise aus der DE 33 36 991 A1 bekannt. Der in Fig. 1 dargestellte Füllstandssensor unterscheidet sich aber von diesem Stand der Technik dadurch, daß er zusätzlich mit einem hochfrequenten Meßsystem ausgestattet ist.

Die Schnittansicht des Schwingstabes 24 in Fig. 1 läßt erkennen, daß dieser Schwingstab als Hohlrohr 40 ausgebildet ist. Das Hohlrohr 40 ist an dem der Membran 22 abgewandten Ende verschlossen. In dem Hohlrohr 40 ist nahe der Membran 22 ein Ultraschallwandler 42 so angebracht, daß er hochfrequente Ultraschallschwingungen auf das Hohlrohr übertragen kann, die sich als elastische Wellen in dem Hohlrohr fortpflanzen können, das als Wellenleiter für die elastischen Wellen dient. Die elastischen Wellen laufen entlang dem Hohlrohr 40 zu dem verschlossenen Ende, an dem sie reflektiert werden und als Echowellen zu dem Ultraschallwandler 42 zurückkehren. Zur Überwachung des Füllstands mit diesem hochfrequenten Meßsystem wird die Tatsache ausgenutzt, daß die Ausbreitungsgeschwindigkeit der Ultraschallwellen in dem Hohlrohr 40 davon abhängt, ob sich das Hohlrohr 40 in Luft befindet oder in ein Füllgut eingetaucht ist; sie ist bei eingetauchtem Hohlrohr wegen der zusätzlichen Masse, die mit der Rohrwand in Verbindung steht, niedriger als in Luft, und demzufolge ist die Laufzeit der elastischen Wellen bei eingetauchtem Hohlrohr größer als dann, wenn sich das Hohlrohr in Luft befindet.

Der Ultraschallwandler 42, der als Sendewandler für die Aussendung der elastischen Wellen und als Empfangswandler für die reflektierten Echowellen dient, ist vorzugsweise wieder ein piezoelektrischer Wandler, der für entsprechend hohe Frequenzen ausgelegt ist. In Fig. 2 ist auch die Erregungs- und Auswerteschaltung 44 für das hochfrequente Meßsystem des Füllstandssensors dargestellt. Ein Sendeimpulsgenerator 45 erzeugt in periodischen Abständen kurze Hochfrequenzimpulse, die über eine Sende-Empfangsweiche 46 an den Ultraschallwandler 42 angelegt werden, der durch jeden Sendeimpuls zur Aussendung eines Ultraschallimpulses der gleichen Frequenz angeregt wird. Der nach jeder Aussendung eines Ultraschallimpulses empfangene Echoimpuls wird vom Ultraschallwandler 42 in einen elektrischen Empfangsimpuls umgewandelt, der über die Sende-Empfangsweiche 46 einer Laufzeitmeßschaltung 47 zugeführt wird. Die Laufzeitmeßschaltung 47 ermittelt die Laufzeit zwischen der Aussendung eines Sendeimpulses und dem Eintreffen des Empfangsimpulses, und sie vergleicht die gemessene Laufzeit mit einem Schwellenwert. Wenn die gemessene Laufzeit über dem Schwellenwert liegt, hat das Ausgangssignal der Laufzeitmeßschaltung 47 einen ersten Signalwert, der anzeigt, daß sich das Hohlrohr 40 in Luft befindet und somit der zu überwachende Füllstand nicht erreicht ist. Wenn dagegen die gemessene Laufzeit unter dem Schwellenwert liegt, hat das Ausgangssignal der Laufzeitmeßschaltung 47 einen zweiten Signalwert, der anzeigt, daß das Hohlrohr 40 von dem Füllgut bedeckt ist, und somit der zu überwachende Füllstand erreicht oder überschritten ist.

Damit eine eindeutige Bestimmung der Laufzeit möglich ist, muß die Dauer der Ultraschallimpulse kurz im Vergleich zur Laufzeit sein. Die Laufzeit ihrerseits ist wegen der begrenzten Länge des Schwingstabs 24 sehr kurz. Dementsprechend muß die Frequenz der Ultraschallwellen hoch sein; sie liegt beispielsweise in der Größenordnung von 30 kHz.

Man erhält auf diese Weise an den Ausgängen des Frequenzdiskriminators 38 und der Laufzeitmeßschaltung 47 zwei Füllstandsanzeigesignale, die unabhängig voneinander unter sehr verschiedenen Bedingungen entstehen, nämlich einerseits ein Signal, das von der vom Füllgut beeinflußten niedrigen Eigenresonanzfrequenz eines mechanischen Schwingsystems abhängt, und andererseits ein Signal, das von der vom Füllgut beeinflußten Ausbreitungsgeschwindigkeit bzw. Laufzeit hochfrequenter elastischer Wellen abhängt. Dadurch bieten sich dem Anwender die folgenden Möglichkeiten zur Verwertung dieser Signale:

- Wenn das zu überwachende Füllgut von solcher Beschaffenheit ist, daß die beiden Meßsysteme gültige Ergebnisse liefern, können die beiden Signale zur gegenseitigen Kontrolle und zur Erhöhung der Sicherheit der Meßanordnung verwendet werden. In diesem Fall ist die Messung mit Sicherheit gültig, wenn beide Signale den gleichen Zustand anzeigen. Wenn dagegen die beiden Signale unterschiedliche Zustände anzeigen, läßt sich gegebenenfalls feststellen, welches der beiden Meßsysteme ausgefallen ist, so daß die Messung mit dem anderen Meßsystem fortgesetzt werden kann.

- Wenn das zu überwachende Füllgut von solcher Beschaffenheit ist, daß nur eines der beiden Meßsysteme für die Überwachung geeignet ist, kann die Überwachung mit diesem Meßsystem durchgeführt werden, während das andere Meßsystem abgeschaltet ist. So kann beispielsweise die Überwachung des Füllstands von ausgasenden Füllgütern mit dem niederfrequenten Meßsystem und die Überwachung von Füllgütern, die zu weichem Ansatz neigen, mit dem hochfrequenten Meßsystem erfolgen. Beim Bestehen von Fremdvibrationen kann jeweils das Meßsystem verwendet werden, das für die Frequenz der Fremdvibrationen nicht empfindlich ist, also bei hochfrequenten Fremdvibrationen das niederfrequente Meßsystem und bei niederfrequenten Fremdvibrationen das hochfrequente Meßsystem.

Diese Verwertung der Ausgangssignale der beiden Meßsysteme kann durch eine gemeinsame Signalverarbeitungsschaltung erfolgen, die beispielsweise durch einen Mikrocomputer 49 gebildet ist.

Natürlich muß bei der in Fig. 1 dargestellten Ausführungsform der Schwingstab 25 so ausgebildet sein, daß er genau das gleiche Schwingungsverhalten wie der Schwingstab 24 zeigt. Er ist also ebenfalls als Hohlrohr mit den gleichen Abmessungen wie das Hohlrohr 40 des Schwingstabes 24 ausgebildet, und an der Stelle, an der sich im Hohlrohr 40 der Ultraschallwandler 42 befindet, ist im Schwingstab 25 eine entsprechende Ersatzmasse angebracht. Wahlweise ist es auch möglich, im Schwingstab 25 einen weiteren Ultraschallwandler anzubringen und mit einer zugehörigen Erregungs- und Auswerteschaltung zu verbinden, so daß zusätzlich zu dem niederfrequenten Meßsystem zwei hochfrequente Meßsysteme vorhanden sind. Die beiden hochfrequenten Meßsysteme können in diesem Fall zur gegenseitigen Kontrolle verwendet werden, wodurch die Sicherheit der Vorrichtung noch weiter erhöht wird.

Fig. 3 zeigt in perspektivischer Darstellung einen piezoelektrischen Ultraschallwandler 50, der zur Verwendung als Ultraschallwandler 42 in der Vorrichtung von Fig. 1 geeignet ist, und Fig. 4 zeigt einen Querschnitt durch den den Ultraschallwandler 50 enthaltenden Abschnitt des Hohlrohres 40. Der piezoelektrische Ultraschallwandler 50 besteht aus einem quaderförmigen Piezokristall 52, der so bemessen ist, daß er in das Hohlrohr 40 eingesetzt werden kann und an einander diametral gegenüberliegenden Stellen an der Wand des Hohlrohres anliegt. Auf den der Wand des Hohlrohres zugewandten Schmalseiten des Piezokristalls 52 sind Elektroden 54, 56 angebracht, an die die elektrischen Erregungsimpulse angelegt werden, so daß der Piezokristall 52 in diametral gerichtete Dickenschwingungen versetzt wird, wie in Fig. 4 durch den Doppelpfeil angedeutet ist. Diese Schwingungen werden auf die Wand des Hohlrohres 40 übertragen und pflanzen sich darin als elastische Wellen fort.

Der piezoelektrische Wandler 50 kann in dem Hohlrohr 40 durch Kleben befestigt werden, wobei ein Klebstoff verwendet wird, der die kreissegmentförmigen Hohlräume 58 zwischen den Elektroden 54, 56 und der Innenfläche der Wand des Hohlrohres 40 ausfüllt und nach dem Aushärten eine starre Verbindung ergibt, die die Schwingungen des piezoelektrischen Wandlers 50 auf die Wand des Hohlrohres 40 überträgt. Wahlweise kann der Piezokristall 52 auch so geformt sein, daß die die Elektroden 54, 56 tragenden Flächen die gleiche Krümmung wie die Innenfläche der Wand des Hohlrohres 40 haben und somit nach dem Einbau flächig an dieser Innenfläche anliegen. Dies kann beispielsweise dadurch erreicht werden, daß der Piezokristall 52 aus einer kreisrunden Scheibe geschnitten wird, deren Durchmesser gleich dem Innendurchmesser des Hohlrohres 40 ist.

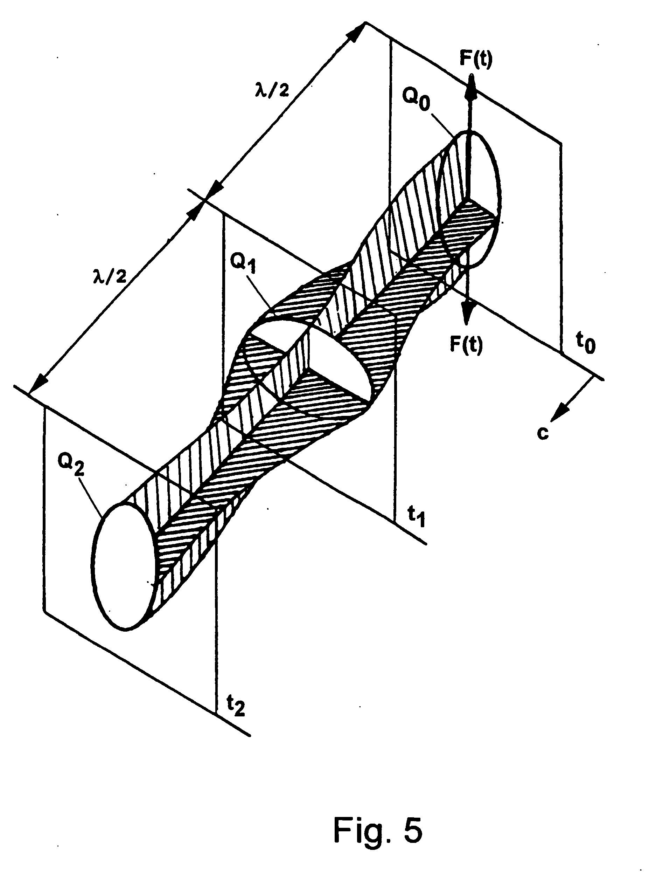

Der piezoelektrische Wandler 50 regt den vom Hohlrohr 40 gebildeten rohrförmigen elastischen Wellenleiter zu dem in Fig. 5 dargestellten Schwingungsmodus an. Die durch die Pfeile F(t) dargestellten Dickenschwingungen des Piezokristalls 52 verursachen in einem Zeitpunkt $t_0$ den elliptischen Rohrquerschnitt $Q_0$, der nach einer halben Periodendauer im Zeitpunkt $t_1$ in einen um 90° verdrehten elliptischen Querschnitt $Q_1$ und nach einer vollen Periodendauer im Zeitpunkt $t_2$ in den um 180° verdrehten elliptischen Querschnitt $Q_2$ übergeht, der wieder mit dem Querschnitt $Q_0$ übereinstimmt. Diese Querschnittsverformung pflanzt sich mit der Ausbreitungsgeschwindigkeit c der Ultraschallwellen entlang dem rohrförmigen Wellenleiter fort, so daß die elliptischen Querschnitte jeweils in Abständen der halben Wellenlänge λ/2 gegeneinander um 90° verdreht sind.

Damit bei dem Ausführungsbeispiel von Fig. 1 die hochfrequente Schwingung des rohrförmigen Schwingstabes 24 einen möglichst geringen Einfluß auf die niederfrequente Biegeschwingung des Schwingstabes ausübt, ist es vorteilhaft, das Hohlrohr 40 in diesem Schwingungsmodus derart anzuregen, daß jedes Paddel 26 radial entlang einer Knotenlinie der hochfrequenten Schwingung liegt. Aus diesem Grund ist gemäß Fig. 4 der piezoelektrische Wandler 50 im Winkel von 45° zu der die Paddel 26 enthaltenden Ebene eingebaut.

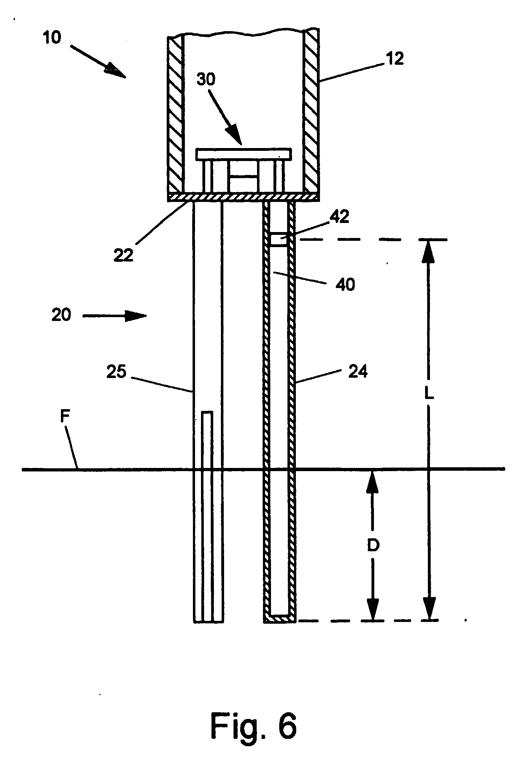

Der Füllstandsensor 10 kann, wie in Fig. 1 dargestellt ist, auf der Höhe des zu überwachenden Füllstands horizontal in einer Öffnung der Behälterwand 14 befestigt sein, er kann aber auch, wie in Fig. 6 gezeigt ist, in vertikaler Position im Behälter eingebaut werden. Für die Überwachung des Füllstands durch das niederfrequente Meßsystem ergibt sich dadurch kein Unterschied. Dagegen ermöglicht das hochfrequente Meßsystem in diesem Fall nicht nur die Feststellung, ob der zu überwachende Füllstand erreicht ist oder nicht, sondern auch die Bestimmung des genauen Füllstands, d.h. der Höhe der Füllgutoberfläche F, im Bereich der Strecke L zwischen dem Ultraschallwandler 42 und dem Ende des durch den Schwingstab 24 gebildeten elastischen Wellenleiters.

Wenn der Wellenleiter nicht in das Füllgut eintaucht, breiten sich die vom Ultraschallwandler 42 erzeugten Ultraschallwellen mit der durch das Material des Hohlrohres 40 bestimmten Schallgeschwindigkeit c entlang der Rohrwand aus. Die zwischen der Aussendung eines Ultraschallimpulses und dem Empfang des Echoimpulses gemessene Laufzeit beträgt daher für den Hin- und Rückweg

$$T_M = 2 \cdot L/c \qquad\qquad (1)$$

Wenn dagegen der Schwingstab 24, wie in Fig. 6 gezeigt ist, über eine Strecke D in das Füllgut eintaucht, besteht die Schallgeschwindigkeit c nur in dem nicht eingetauchten Abschnitt der Länge L-D. Der auf diesen Abschnitt entfallende Teil der Laufzeit beträgt

$$T_1 = 2 \cdot (L-D)/c \qquad\qquad (2)$$

In dem eingetauchten Abschnitt der Länge D besteht dagegen wegen der zusätzlichen Masse, die mit der Rohrwand in Berührung steht, eine geringere Schallgeschwindigkeit c*. Der auf diesen Abschnitt entfallende Teil der Laufzeit beträgt somit

$$T_2 = 2 \cdot Dc* \qquad\qquad (3)$$

Die gemessene Gesamtlaufzeit $T_M$ setzt sich somit wie folgt zusammen

$$T_M = T_1 + T_2 = 2 \cdot [(L-D)/c + D/c*] \qquad\qquad (4)$$

Daraus kann die Länge D des eingetauchten Abschnitts berechnet werden.

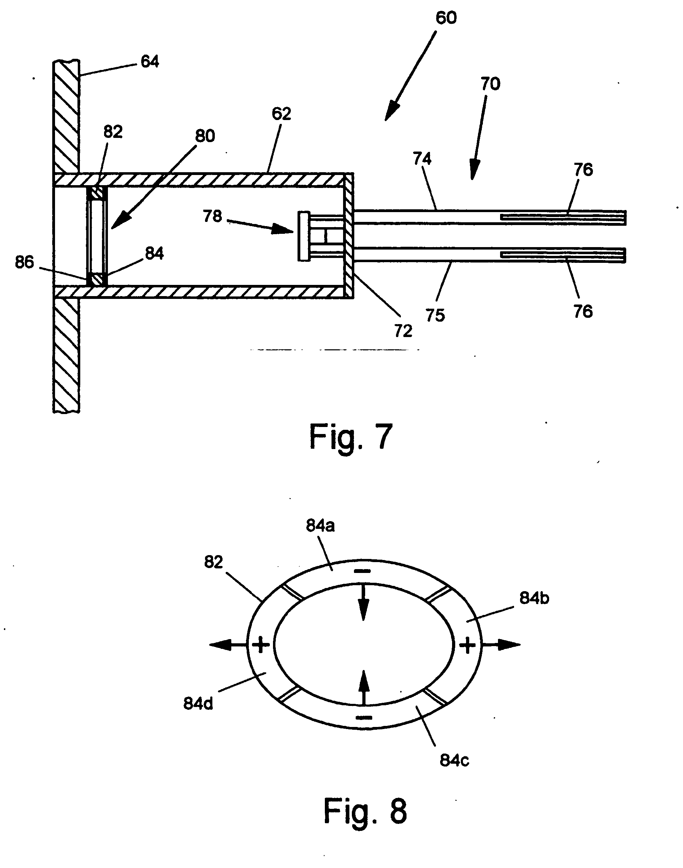

Fig. 7 zeigt eine zweite Ausführungsform eines Füllstandssensors 60 mit einem niederfrequenten Meßsystem und einem hochfrequenten Meßsystem. Der Füllstandssensor 60 hat ein rohrförmiges Gehäuse 62, das auf der Höhe des zu überwachenden Füllstands so an einer Behälterwand 64 befestigt ist, daß es vollständig oder zumindest über den größten Teil seiner Länge im Inneren des Behälters liegt. Das niederfrequente Meßsystem enthält wieder ein mechanisches Schwingsystem 70 mit einer Membran 72, die rings um ihren Umfangsrand mit dem Rand des rohrförmigen Gehäuses 62 verbunden ist, und mit zwei Schwingstäben 74, 75, die jeweils mit einem Ende an der Membran 72 befestigt sind und an ihren freien Enden jeweils zwei einander gegenüberliegende Paddel 76 tragen. Die Schwingstäbe 74, 75 bestehen bei dieser Ausführungsform aus flachen Metallplatten. Die im Inneren des Gehäuses liegende Seite der Membran 72 ist mit einem elektromechanischen Wandlersystem 78 verbunden, das so ausgebildet ist, daß es das mechanische Schwingsystem 70 zu Schwingungen mit seiner Eigenresonanzfrequenz anregen kann. Das Wandlersystem 78 ist in gleicher Weise ausgebildet wie das Wandlersystem 30 von Fig. 1 und mit einer Erregungs- und Auswerteschaltung der in Fig. 2 dargestellten Art verbunden. Insoweit entspricht das niederfrequente Meßsystem des Füllstandssensors 60 von Fig. 7 dem niederfrequenten Meßsystem des Füllstandssensors 10 von Fig. 1, und es hat die gleiche Funktionsweise wie dieses.

Im Unterschied zu der Ausführungsform von Fig. 1 wird bei dem Füllstandssensor 60 von Fig. 7 nicht einer der beiden Schwingstäbe 74, 75, sondern das rohrförmige Gehäuse 62 als elastischer Wellenleiter für das hochfrequente Meßsystem verwendet. Zu diesem Zweck ist in dem Gehäuse 62 ein piezoelektrischer Wandler 80 angebracht, der aus einem ringförmigen Piezokristall 82 besteht, auf dessen Stirnflächen Elektroden 84 und 86 angebracht sind. Der Außendurchmesser des Piezokristalls 82 entspricht dem Innendurchmesser des rohrförmigen Gehäuses, so daß er mit seiner Umfangsfläche an der Innenfläche der Gehäusewand anliegt, an der er beispielsweise durch Kleben befestigt sein kann. Fig. 8 läßt eine mögliche Ausbildung der auf der einen Seite des Piezokristalls 82 angebrachten Elektroden 84 erkennen. Sie bestehen aus vier Sektoren 84a, 84b, 84c und 84d; die jeweils einander diametral entgegengesetzten Elektroden 84a, 84c einerseits und 84b, 84d andrerseits sind jeweils an des gleiche Potential gelegt, wie durch die Plus- und Minuszeichen angezeigt ist. Die auf der entgegengesetzten Seite angebrachten Elektroden 86 sind in gleicher Weise ausgebildet und beschaltet. Der Piezokristall ist derart radial polarisiert, daß er sich unter dem Einfluß einer an die Elektroden 84 und 86 angelegten elektrischen Spannung einer bestimmten Polarität zu einem elliptischen Querschnitt verformt, wie er in Fig. 8 übertrieben dargestellt ist, während er sich beim Anlegen einer elektrischen Spannung der entgegengesetzten Polarität zu einem um 90° verdrehten elliptischen Querschnitt verformt. Die Elektroden 84 und 86 sind mit einer Erregungs- und Auswerteschaltung der in Fig. 2 dargestellten Art verbunden, so daß beim Anlegen eines elektrischen Sendeimpulses der vom Gehäuse 62 gebildete rohrförmige Wellenleiter zu Ultraschallschwingungen des in Fig. 5 dargestellten Schwingungsmodus angeregt wird. Diese Ultraschallschwingungen pflanzen sich als elastische Ultraschallwellen in der Gehäusewand bis zu dem mit der Membran 72 verbundenen Ende fort, wo sie reflektiert werden und als Echowellen zu dem piezoelektrischen Wandler 80 zurückkehren. Durch Messung der Laufzeit der Ultraschallimpulse kann festgestellt werden, ob sich das Gehäuse 62 in Luft befindet oder ob es in das Füllgut eingetaucht ist.

Eine andere Ausführungsform eines Füllstandssensors 90 mit einem niederfrequenten Meßsystem und einem hochfrequenten Meßsystem ist in Fig. 9 dargestellt. Der Füllstandssensor 90 hat, in gleicher Weise wie die zuvor beschriebenen Füllstandssensoren 10 und 60, ein rohrförmiges Gehäuse 91, das ein mechanisches Schwingsystem 92 trägt, das aus einer Membran 93 und zwei Schwingstäben 94, 95 besteht und durch ein Wandlersystem 96 zu Schwingungen mit seiner Eigenresonanzfrequenz angeregt wird. Das mechanische Schwingsystem 92 bildet in Verbindung mit einer Erregungs- und Auswerteschaltung der in Fig. 2 gezeigten Art das niederfrequente Meßsystem. Im Gegensatz zu den zuvor beschriebenen Ausführungsformen hat jedoch der Füllstandssensor 90 keinen elastischen Wellenleiter zur Übertragung von Ultraschallwellen; vielmehr ist das hochfrequente Meßsystem dadurch gebildet, daß der zwischen den Schwingstäben 94 und 95 liegende Bereich 97 der Membran 92 zu Schwingungen mit einer Frequenz angeregt wird, die wesentlich höher als die Eigenresonanzfrequenz des niederfrequenten mechanischen Schwingsystems 92 ist und vorzugsweise der Eigenresonanzfrequenz des Membranbereiches 97 entspricht. Diese Anregung erfolgt vorzugsweise durch das gleiche Wandlersystem 96, das auch zur Anregung der Eigenresonanzschwingung des niederfrequenten mechanischen Schwingsystems 92 verwendet wird. Dies kann beispielsweise dadurch geschehen, daß das Wandlersystem 96 durch Umschaltung abwechselnd in einen Selbsterregungskreis für die niederfrequente Schwingung des mechanischen Schwingsystems 92 und in einen Selbsterregungskreis für die hochfrequenten Schwingungen des Membranbereiches 97 eingefügt wird. Die Überwachung des Füllstands durch das hochfrequente Meßsystem erfolgt in diesem Fall nicht durch eine Laufzeitmessung, sondern durch Auswertung der Eigenresonanzfrequenz des Membranbereiches 97, die dann, wenn der Membranbereich von Füllgut bedeckt ist, niedriger ist als dann, wenn der Membranbereich 97 in Luft schwingt.

An den beschriebenen Ausführungsformen können verschiedene Abänderungen vorgenommen werden, die dem Fachmann offensichtlich sind. So können für das niederfrequente Meßsystem anstelle eines mechanischen Schwingsystems mit zwei gegensinnig schwingenden Schwingstäben andere bekannte mechanische Schwingsysteme verwendet werden, beispielsweise Schwingsysteme mit nur einem Schwingstab. Desgleichen kann das Wandlersystem für das niederfrequente Meßsystem in jeder an sich bekannten Weise ausgebildet sein; beispielsweise können die beiden elektromechanischen Wandler nebeneinander an der Membran angeordnet sein, oder sie können nach dem aus der DE 195 23 461 A1 bekannten Prinzip des sogenannten Bimorph-Antriebs auf einer zusätzlichen Membran angebracht sein, die parallel zu der die Schwingstäbe tragenden Membran angeordnet und mit dieser mechanisch gekoppelt ist.

**Patentansprüche**

1. Vorrichtung zur Feststellung und/oder Überwachung des Füllstands eines Füllguts in einem Behälter mit Hilfe eines Füllstandssensors, der ein mechanisches Schwingsystem (20) und ein elektromechanisches Wandlersystem (30, 78, 92) aufweist, wobei der Füllstandssensor so im Behälter angebracht ist, daß das mechanische Schwingsystem mit dem Füllgut in Berührung kommt, wenn dieses einen vorbestimmten Füllstand erreicht, und wobei das Wandlersystem mit einer Niederfrequenz-Erregungsschaltung (36) verbunden ist, die so ausgebildet ist, daß sie das mechanische Schwingsystem zu einer niederfrequenten Schwingung erregt, sowie mit einer Niederfrequenz-Auswerteschaltung (36), die durch Auswertung der Frequenz und/oder der Amplitude eines vom Wandlersystem gelieferten elektrischen Signals ein Ausgangssignal liefert, das anzeigt, ob das mechanische Schwingsystem mit dem Füllgut in Berührung steht oder nicht, **dadurch gekennzeichnet, daß** ein Bestandteil des Füllstandssensors, der mit dem Füllgut in Berührung kommt, wenn dieses den vorbestimmten Füllstand erreicht, mit einem elektromechanischen Wandlersystem (42, 82, 92) zur Anregung einer hochfrequenten elastischen Schwingung in dem Bestandteil verbunden ist und daß eine Hochfrequenz-Auswerteschaltung (47) vorgesehen ist, die durch Auswertung eines in Abhängigkeit von der hochfrequenten elastischen Schwingung erzeugten elektrischen Signals ein Ausgangssignal erzeugt, das anzeigt, ob der Bestandteil mit dem Füllgut in Berührung steht oder nicht.

2. Vorrichtung nach Anspruch 1, **dadurch gekennzeichnet, daß** der Bestandteil als elastischer Wellenleiter (40) ausgebildet ist, in dem sich die hochfrequente elastische Schwingung als elastische Welle fortpflanzt, und daß die Auswerteschaltung die Laufzeit der elastischen Welle erfaßt und auswertet.

3. Vorrichtung nach Anspruch 2, **dadurch gekennzeichnet, daß** das elektromechanische Wandlersystem (42, 82, 92) zur Anregung der hochfrequenten elastischen Schwingung mit einer Erregungsschaltung zur Erzeugung kurzer Schwingungsimpulse verbunden ist und daß die Auswerteschaltung die Laufzeit zwischen der Aussendung eines Schwingungsimpulses und dem Empfang eines reflektierten Echoimpulses durch das Wandlersystem erfaßt.

**4.** Vorrichtung nach Anspruch 2 oder 3, **dadurch gekennzeichnet, daß** das Wandlersystem durch einen piezoelektrischen Wandler (30, 50, 80) gebildet ist.

**5.** Vorrichtung nach einem der Ansprüche 2 bis 4, **dadurch gekennzeichnet, daß** der als elastischer Wellenleiter ausgebildete Bestandteil des FüLlstandssensors ein in den Behälter ragender Schwingstab (24, 25) ist.

**6.** Vorrichtung nach Anspruch 5, **dadurch gekennzeichnet, daß** der Schwingstab (24, 25) als Hohlrohr ausgebildet ist.

**7.** Vorrichtung nach einem der Ansprüche 2 bis 4, **dadurch gekennzeichnet, daß** der als elastischer Wellenleiter (40) ausgebildete Bestandteil des Füllstandssensors ein als Träger für das mechanische Schwingsystem dienendes rohrförmiges Teil ist, das in den Behälter ragt.

**8.** Vorrichtung nach einem der Ansprüche 2 bis 7, **dadurch gekennzeichnet, daß** der elastische Wellenleiter (40) vertikal im Gehäuse angeordnet ist und daß die Hochfrequenz-Auswerteschaltung durch Messung der Laufzeit der elastischen Wellen die Länge des in das Füllgut eintauchenden Abschnitts des Wellenleiters feststellt.

**9.** Vorrichtung nach Anspruch 1, **dadurch gekennzeichnet, daß** die Hochfrequenz-Auswerteschaltung (47) die Frequenz der hochfrequenten elastischen Schwingung des Bestandteils des Füllstandssensors auswertet.

**10.** Vorrichtung nach Anspruch 9, **dadurch gekennzeichnet daß** das mechanische Schwingsystem eine Membran (22, 72, 92) und zwei jeweils mit einem Ende an der Membran befestigte Schwingstäbe aufweist, und daß der zu einer hochfrequenten elastischen Schwingung angeregte Bestandteil des Füllstandssensors der zwischen den Befestigungsstellen der Schwingstäbe liegende Abschnitt der Membran ist.

**11.** Vorrichtung nach Anspruch 10, **dadurch gekennzeichnet, daß** ein gemeinsames elektromechanisches Wandlersystem, das auf die Membran (22, 72, 92) einwirkt, abwechselnd zur Erregung der niederfrequenten Eigenresonanzschwingung des mechanischen Schwingsystems und zur Anregung der hochfrequenten elastischen Schwingung des Membranabschnitts betrieben wird.

**Claims**

**1.** Unit for determining and/or monitoring the level of a medium in a tank with the aid of a level sensor that exhibits a mechanical vibrator system (20) and an electromechanical transducer system (30, 78, 92) where a) the level sensor is arranged in the tank in such a way that the mechanical vibrator system is in contact with the medium when the medium reaches a predetermined level and where b) the transducer system is connected to a low-frequency excitation circuit that is designed in such a way that it excites the mechanical vibrator system to low-frequency vibration and to a low-frequency evaluation circuit (36) that returns an output signal by evaluating the frequency and/or the amplitude of an electrical signal provided by the transducer system. The output signal indicates whether the mechanical vibrator system is in contact with the medium or not. This is **characterized by** the fact that an integral part of the level sensor that is in contact with the medium when this medium reaches a certain level is connected to an electromechanical transducer system (42, 82, 92) to excite a high-frequency elastic vibration in the integral part. A high-frequency evaluation circuit (47) is provided which generates an output signal by evaluating an electrical signal generated as a function of the high-frequency elastic vibration and indicates whether the integral part is in contact with the medium or not.

**2.** Unit as per the claims in 1 which is **characterized by** the fact that the integral part is designed as an elastic wave guide (40) in which the high-frequency elastic vibration continues as an elastic wave and by the fact that the evaluation circuit records and evaluates the transit time of the elastic wave.

**3.** Unit as per the claims in 2 which is **characterized by** the fact that the electromechanical transducer system (42, 82, 92) is connected to an excitation circuit for generating short vibration pulses to excite high-frequency elastic vibration and by the fact that the evaluation circuit records the transit time between the emission of a vibration pulse and the reception of a reflected echo pulse by the transducer system.

**4.** Unit as per claims 2 or 3 which is **characterized by** the fact that the transducer system is formed by a piezoelectric transducer (30, 50, 80).

**5.** Unit as per one of the claims 2 to 4 which is **characterized by** the fact that the integral part of the level sensor designed as an elastic wave guide is a vibrating rod (24, 24) that projects into the tank.

**6.** Unit as per claim 5 which is **characterized by** the fact that the vibrating rod (24, 25) is designed as a hollow tube.

**7.** Unit as per one of the claims 2 to 4 which is **characterized by** the fact that the integral part of the level sensor designed as an elastic wave guide (40) is a tubular element that serves as a support element for the mechanical vibrator system and projects into the tank.

**8.** Unit as per one of the claims 2 to 7 which is **characterized by** the fact that the elastic wave guide (40) is arranged vertically in the housing and by the fact that the high-frequency evaluation circuit determines the length of the section of the wave guide that is immersed into the medium by measuring the transit time of the elastic waves.

**9.** Unit as per claim 1which is **characterized by** the fact that the high-frequency evaluation circuit (47) evaluates the frequency of the high-frequency elastic vibration of the integral part of the level sensor.

**10.** Unit as per claim 9 which is **characterized by** the fact that the mechanical vibrator system exhibits a membrane (22, 72, 92) and two vibrating rods, each of which is secured to the membrane at one end and by the fact that the integral part of the level sensor that is excited to a high-frequency elastic vibration is the section of the membrane that is located between the securing points of the vibrating rods.

**11.** Unit as per claim 10 which is **characterized by** the fact that a common electromechanical transducer system that acts on the membrane (22, 72, 92) is operated alternately to excite the low-frequency natural resonance frequency of the mechanical vibrator system and to excite the high-frequency elastic vibration of the membrane section.

**Revendications**

**1.** Dispositif destiné à la détermination et/ou la surveillance du niveau de remplissage d'un produit dans un récipient à l'aide d'un capteur de niveau, qui comprend un système mécanique vibrant (20) et un système de convertisseurs électromécaniques (30, 78, 92), le capteur de niveau étant monté sur le récipient de telle sorte que le système mécanique vibrant entre en contact avec le produit lorsque ce dernier atteint un niveau de remplissage prédéterminé, et le système de convertisseurs étant relié avec un circuit d'excitation (36) basse fréquence, qui est conçu de manière à exciter le système mécanique vibrant en une vibration basse fréquence, ainsi qu'avec un circuit d'exploitation (36) basse fréquence qui, par le biais de l'exploitation de la fréquence et/ou de l'amplitude d'un signal électrique fourni par un système de convertisseurs, fournit un signal de sortie indiquant si le système mécanique vibrant est en contact ou non avec le produit, **caractérisé en ce qu'**un composant du capteur de niveau, qui entre en contact avec le produit lorsque ce dernier atteint un niveau de remplissage prédéfini, est relié avec un système de convertisseurs électromécaniques (42, 82, 92) destiné à l'excitation d'une vibration élastique de haute fréquence dans le composant, et qu'un circuit d'exploitation (47) haute fréquence est prévu qui, par l'exploitation d'un signal électrique généré en fonction de la vibration élastique haute fréquence, génère un signal de sortie indiquant si le composant est en contact ou non avec le produit.

**2.** Dispositif selon la revendication 1, **caractérisé en ce que** le composant est constitué en tant que guide d'ondes élastique (40), dans lequel la vibration élastique haute fréquence se propage en tant qu'onde élastique, et **en ce que** le circuit d'exploitation détermine et exploite le temps de propagation de l'onde élastique.

**3.** Dispositif selon la revendication 2, **caractérisé en ce que** le système de convertisseurs électromécaniques (42, 82, 92) destiné à l'excitation de la vibration élastique de haute fréquence est relié avec un circuit d'excitation destiné à la génération d'impulsions de vibration courtes, et **en ce que** le circuit d'exploitation détermine le temps de propagation entre l'émission d'une impulsion de vibration et la réception d'une impulsion d'écho réfléchie par le système de convertisseurs.

**4.** Dispositif selon la revendication 2 ou 3, **caractérisé en ce que** le système de convertisseurs (30, 50, 80) est constitué d'un convertisseur piézoélectrique.

**5.** Dispositif selon l'une des revendications 2 à 4, **caractérisé en ce que** le composant du capteur de niveau conçu en tant que guide d'ondes élastique est une tige vibrante (24, 25) s'étendant à l'intérieur du récipient.

6. Dispositif selon la revendication 5, **caractérisé en ce que** la tige vibrante (24, 25) est conçue sous la forme d'un tube creux.

7. Dispositif selon l'une des revendications 2 à 4, **caractérisé en ce que** le composant du capteur de niveau conçu en tant que guide d'ondes (40) élastique est une pièce tubulaire servant de support pour le système mécanique vibrant, qui s'étend à l'intérieur du récipient.

8. Dispositif selon l'une des revendications 2 à 7, **caractérisé en ce que** le guide d'ondes (40) élastique est disposé verticalement dans le boîtier, et **en ce que** le circuit d'exploitation haute fréquence détermine, par la mesure du temps de propagation des ondes élastiques, la longueur de la partie immergée du guide d'ondes dans le produit.

9. Dispositif selon la revendication 1, **caractérisé en ce que** le circuit d'exploitation (47) haute fréquence exploite la fréquence de la vibration élastique haute fréquence du composant du capteur de niveau.

10. Dispositif selon la revendication 9, **caractérisé en ce que** le système mécanique vibrant se compose d'une membrane (22, 72, 92) et de deux tiges vibrantes, dont une extrémité de chacune est fixée sur la membrane, et **en ce que** le composant du capteur de niveau excité en une vibration élastique haute fréquence constitue la partie de la membrane située entre les points de fixation des tiges vibrantes.

11. Dispositif selon la revendication 10, **caractérisé en ce qu'**un système de convertisseurs électromécaniques commun, qui agit sur la membrane (22, 72, 92), est utilisé à tour de rôle pour l'excitation de la vibration de résonance propre basse fréquence du système mécanique vibrant et pour l'excitation de la vibration élastique haute fréquence de la partie de membrane.

**Fig. 1**

**Fig. 3**

**Fig. 4**

36

37

32

31

38 Frequenzdiskriminator

49

Mikrocomputer

47 Laufzeitmeßschaltung

46

42

45 Sendeimpulsgenerator

44

# Fig. 2

90

92

91

94

96

97

42

93

95

# Fig. 9

Fig. 5

Fig. 6

Fig. 7

Fig. 8